## Europäisches Patentamt
## European Patent Office
## Office européen des brevets

(19)

(11) Numéro de publication: **0 119 945**
**B1**

(12)
# FASCICULE DE BREVET EUROPÉEN

(45) Date de publication du fascicule du brevet: **10.06.87**

(51) Int. Cl.⁴: **H 04 N 7/167**

(21) Numéro de dépôt: **84460002.3**

(22) Date de dépôt: **20.03.84**

(54) **Procédés et dispositifs d'embrouillage et de désembrouillage pour images de télévision.**

(30) Priorité: **21.03.83 FR 8305076**

(43) Date de publication de la demande: **26.09.84 Bulletin 84/39**

(45) Mention de la délivrance du brevet: **10.06.87 Bulletin 87/24**

(84) Etats contractants désignés: **AT BE CH DE GB IT LI LU NL SE**

(56) Documents cité:
EP-A-0 103 339
WO-A-81/02499
FR-A-2 320 676
FR-A-2 431 809

IEE PROCEEDINGS, vol. 129, no. 7, septembre 1982, partie A, pages 485-492, Londres, GB; T.S. ROBSON: "Extended-definition television service"

(73) Titulaire: **Etablissement Public de Diffusion dit "Télédiffusion de France", 21- 27 rue Barbès, F-92120 Montrouge (FR)**

(72) Inventeur: **Gautier, Christian Jean François, Le Boulais, F-35690 Acigne (FR)**

(74) Mandataire: **Le Guen, Louis François, Cabinet Louis Le Guen 1, avenue Edouard VII B.P. 91, F-35802 Dinard Cédex (FR)**

## Description

La présente invention concerne un procédé d'embrouillage et de désembrouillage permettant la transmission ou la diffusion d'images de télévision, les signaux constituant les images ayant subi à la source une transformation telle que les images soient inintelligibles pendant la transmission ou la diffusion. A la réception, seule la transformation inverse de la précédents permet de restituer l'image initiale.

L'invention concerne également des circuits permettant de mettre en oeuvre le procédé d'embrouillage et de désembrouillage, respectivement à la station émettrice et dans les récepteurs de télévision.

On rappelle que, d'une manière générale, les émissions de télévision embrouillées sont destinées à des usagers qui sont munis de moyens de désembrouillags adéquats qui leur permettent d'afficher sur l'écran de leur récepteur des images nettes, les images affichées sur les écrans des récepteurs des autres usagers étant méconnaissables et difficiles, sinon pénibles à regarder. Les signaux embrouillés peuvent être portés sur toute vois de transmission dont ils doivent respecter les normes en vigueur, que ce soit dans le réseau terrestre de télédiffusion, les câbles ou le réseau par satellite.

En pratique, un bon embrouillage est obtenu en combinant plusieurs types ou composantes d'embrouillage. Dans l'état de la technique, on connaît trois composantes d'embrouillage.

Une première composante d'embrouillage fait intervenir des inversions de polarité de modulation. A ce sujet, on peut citer les procédés décrits dans les brevets FR-A-2 330 236, DE-A-1 907 580, FR-A-1 034 776, US-A-2 972 009 et DE-A-1 254 676.

Les deuxième et troisième composantes d'embrouillage font intervenir des décalages en position de l'information portée par une ligne d'image de télévision par rapport aux signaux de synchronisation. Ces décalages affectent soit la totalité de l'information de la ligne provoquant un effet de retard simple, soit affectant des portions de ligne en provoquant des effets de décalage circulaire.

Les effets de retard simple, constituant la deuxième composante d'embrouillage, rendent difficile, sinon pénible, la compréhension de l'émission, mais seuls ils n'assurent pas le confidentialité du message. Ceci résulte du fait que les normes de transmission d'images de télévision ne permettent pas de décalages importants entre l'information de synchronisation et l'information d'image, sans amputer cette dernière d'une longueur d'information égale au décalage maximal. Des effets de retard simple sont prévus dans les brevets FR-A-2 330 236, DE-A-1 907 580, US-A-2 510 046, US-A-2 619 530, DE-A-1 254 676. On peut également assimiler à cette composante, l'effet créé dans le brevet US-A-2 892 882, où l'on fait varier entre deux valeurs la largeur de l'impulsion de synchronisation ligne.

Les effets de décalage circulaire, mis en oeuvre dans les brevets FR-A-2 431 809 et FR-A-2 320 676, assurent un bonne confidentialité du message. Toutefois, l'utilisation du décalage circulaire conduit, en cas d'écho dans la transmission, à laisser subsister un défaut dans le signal de ligne, immédiatement derrière la salve de référence de la porteuse de chrominance.

Dans le document WO-A-8 102 499, il est, d'une manière semblable, proposé de découper les lignes en segments qui sont transmis, dans leurs lignes, mais en ordres dispersés, l'ordre normal des échantillons étant conservé dans chaque segment.

Dans le document WO-A-8 102 499, il est également proposé, pour obtenir un autre type d'embrouillage, de modifier l'ordre des lignes ou des trames. Il est même proposé de transmettre une ligne entière dans l'ordre inverse, mais sans la découper en segments. Ce type d'embrouillage n'est pas envisagé dans la présente invention. En effet, il conduit à utiliser des capacités importantes de mémoire qui augmenteraient indûment le coût des récepteurs d'images embrouillées.

Un objet de l'invention consiste à prévoir un procédé d'embrouillage assurant une qualité de confidentialité supérieure ou égale aux procédés utilisant seuls ou en combinaison les trois premières composantes d'embrouillage mentionnées ci-dessus.

Par ailleurs, l'étude de la mise en place de satellites de diffusion a amené certaines administrations européennes à prévoir des normes de transmission différentes des normes actuelles SECAM ou PAL de transmission d'images polychromes. En particulier, un autre système a été proposé qui consiste à compresser temporellement le signal de luminance de 52 microsecondes à 40 microsecondes, pour laisser, dans la durée normale d'une ligne de 64 microsecondes, de la place pour transmettre un signal de chrominance qui occupe 20 microsecondes. Ce système est connu en terminologie anglo-saxonne sous le nom, de "Multiplexed analogue component signals" ou en abrégé de système "MAC", et est décrit dans un article intitulé "Standards for Broadcasting Satellite Services" par K. Lucas et M. Windram et paru dans la revue technique anglaise "IBA Technical Review", n° 18, Mars 1982, pp. 12-27, publiée par la société anglaise "Independent Broadcasting Administration" ou IBA.

Un autre objet de l'invention consiste à prévoir un procédé d'embrouillags qui soit applicable au système MAC mentionné ci-dessus.

Suivant une caractéristique de l'invention, il est prévu un procédé d'embrouillage et de désembrouillage du signal utile d'une ligne de signal vidéo échantillonné, dans lequel au moins une partie du signal utile est découpée en deux segments adjacents, le point de coupure entre les deux segments étant défini d'une manière pseudoaléatoire synchrone à l'émission et à la réception, caractérisé en ce, un des segments étant transmis retourné sur place à l'émission et, à la réception, le segment retourné étant remis dans le sens initial.

Suivant une autre caractéristique, les deux segments sont retournés sur place à l'émission, puis remis dans le sens initial à la réception.

Suivant une autre caractéristique, à la définition pseudo-aléatoire du point de coupure entre les segments, s'ajoute la sélection pseudo-aléatoire du ou des segments à retourner ou non.

Suivant une autre caractéristique, les segments sont, non seulement adjacents, mais se recouvrent partiellement au voisinage du point de coupure.

Suivant une autre caractéristique, à la réception, la portion avant du recouvrement du second segment est négligée, à la réception, lors de la remise dans le sens initial du ou des segments retournés.

Suivant une autre caractéristique, il est prévu un dispositif d'embrouillage comprenant deux mémoires d'échantillons ayant chacune la capacité d'une ligne de signal vidéo, des moyens de commande d'écriture pour mémoriser dans l'ordre naturel les échantillons de chaque ligne de signal vidéo à embrouiller alternativement dans une des mémoires, des moyens de commande de lecture des mémoires, les moyens de commande de lecture étant prévus pour alternativement y lire au moins une partie des échantillons mémorisés dans l'ordre inverse de l'ordre d'entrée.

Suivant une autre caractéristique, il est prévu un dispositif de désembrouillage comprenant deux mémoires d'échantillons ayant chacune la capacité d'une ligne de signal vidéo, des moyens de commande de lecture des mémoires pour y lire alternativement les échantillons dans l'ordre naturel, des moyens de commande d'écriture pour mémoriser chaque ligne de signal vidéo embrouillé alternativement dans une des mémoires, les moyens de commande d'écriture étant prévus pour écrire au moins une partie des échantillons dans l'ordre inverse de l'ordre d'arrivée.

Suivant une autre caractéristique, il est prévu un système constitué de tels dispositifs d'embrouillage et de désembrouillage qui comprend, dans le dispositif d'embrouillage un générateur de clé et dans le ou les dispositifs de désembrouillage un récepteur de clé, ladite clé définissant, par l'intermédiaire d'un générateur de séquence pseudo-aléatoire respectivement prévu dans tous les dispositifs, le rang des échantillons entre lesquels se place la coupure.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est un diagramme schématique d'une ligne de signal vidéo, permettant d'identifier certaines positions temporelles invariantes du signal,

la Fig. 2 est un diagramme schématique d'une ligne de signal vidéo, avant codage,

les Figs. 3a à 3c sont des diagrammes schématiques de trois exemples de lignes de signal vidéo embrouillées suivant l'invention,

la Fig. 4 est le bloc-diagramme d'un circuit d'embrouillage pour source d'émission,

la Fig. 5 est le bloc-diagramme d'un circuit de désembrouillage de récepteur,

la Fig. 6 est un diagramme schématique d'une ligne de signal MAC, et

les Figs. 7 et 8 sont des diagrammes schématiques du signal de la Fig. 6, avant et après embrouillage suivant un des modes de fonctionnement de l'invention.

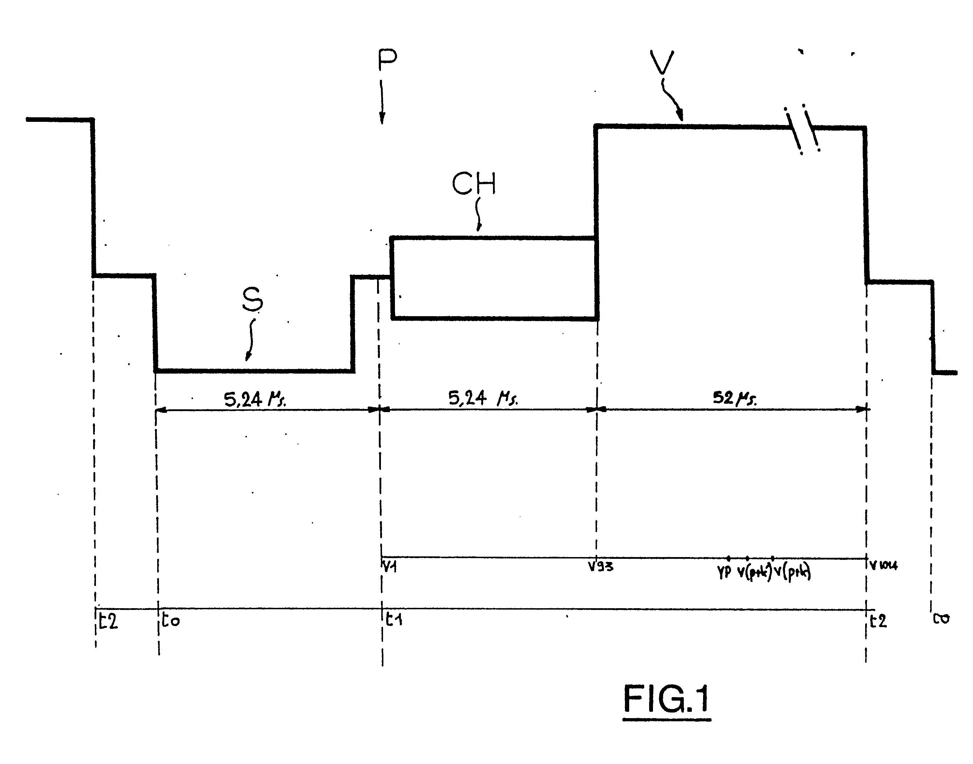

A la Fig. 1, on a représenté une ligne de signal vidéo à polarité positive comprenant l'impulsion de synchronisation de ligne S, le palier de suppression P, la salve de chrominance CH et le signal utile V. L'origine t0 des temps correspond au front avant du signal de synchronisation S. Entre le temps t2, correspondant au début du palier de suppression, et le temps t1, juste avant le début de la salve de référence, le signal vidéo est toujours transmis directement, c'est à dire échantillonné, mais sans passage en mémoire. Le temps écoulé entre t0 et t1 est de 5,24 microsecondes. La salve de chrominance CH, qui se termine 5,24 microsecondes après t1, est échantillonnée, puis mise en mémoire, comme le reste de la ligne, mais non embrouillée. L'embrouillage porte essentiellement sur le signal utile V, qui se termine au temps t2, soit 52 microsecondes après la fin de la salve CH. Le signal V est donc échantillonné, puis écrit en mémoire pour être, au moins partiellement, lu dans un autre ordre que celui de son écriture. L'ensemble des signaux CH et V est échantillonné sur 1014 échantillons utiles, l'échantillonnage étant effectué, par exemple à la fréquence de 17,734 MHz, qui correspond à 1135 fois la fréquence ligne HL. Dans ces conditions, les échantillons V1 à V92 correspondent à la salve de référence CH, tandis que les échantillons V93 à V1014 forment le signal utile V.

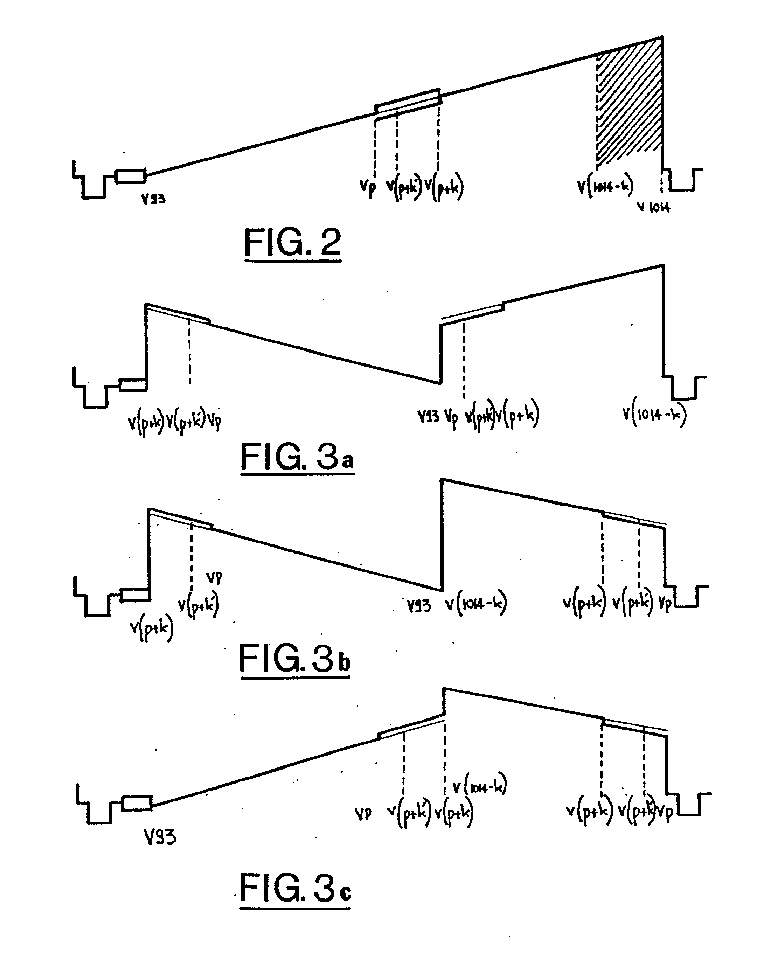

Bien entendu, le procédé de l'invention s'appliquerait également à un signal vidéo à polarité négative. A la Fig. 1, on a donné au signal utile V une forme arbitraire constante étant donné que la Fig. 1 a essentiellement pour but de repérer les instants de référence t0, t1 et t2 du signal vidéo. A la Fig. 2, qui représente également un signal vidéo complet, on a donné au signal utile V une forme arbitraire croissant linéairement, car elle permet, en relation avec les Figs. 3a à 3c, une illustration très simple du procédé d'embrouillage de l'invention.

Il faut donc noter que la transformation, suivant le procédé de l'invention, s'applique à un signal vidéo échantillonné. Les échantillons peuvent être sous forme analogique ou sous forme numérique codée. La fréquence d'échantillonnage de 17,734 MHz tient évidemment compte de la règle de Shannon en fonction de la bande passante du signal. Dans un système de télévision aux normes de 625 lignes et 25 images par seconde, soit une durée de 64 microsecondes, une fréquence d'échantillonnage minimale de 12 MHz peut suffire. Toutefois, afin de simplifier le filtrage et pour pouvoir utiliser des mémoires de capacités usuelles, on a choisi une fréquence d'échantillonnage plus élevée qui conduit à 1024 échantillons, dont 1014 utiles.

A la Fig. 2, on a mentionné sur le signal utile V un échantillon courant Vp, ainsi que les échantillons V(p+k') et V(p+k), ainsi que l'échantillon V(1014-k). On verra dans la suite les rôles de k et k'.

La Fig. 3a montre la ligne transformée de la ligne de la Fig. 2, suivant un mode de transformation suivant l'invention. Le signal utile de la ligne transformée comprend une première partie se composant des échantillons V(p+k) à V93, et d'une seconde partie se composant des échantillons V(p) à V(1014-k). Bien entendu, l'échantillon V(p) suit immédiatement l'échantillon V93. Sous une autre forme, la transformation aboutissant à la ligne de la Fig. 3a consiste à retourner le segment V93 à V(p+k) et à garder presque intact le segment V(p) à V(1014), étant donné qu'on ne fait que lui retrancher k échantillons devant V(1014).

A la Fig. 3b, on a montré la ligne transformée de la ligne de la Fig. 2, suivant un autre mode de transformation suivant l'invention. Le signal utile de la ligne transformée comprend une première partie se composant des échantillons V (p+k) à V93, et d'une seconde partie se composant des échantillons V(1014-k) à V(p). Bien entendu, l'échantillon V(1014-k) suit immédiatement l'échantillon V93. Sous une autre forme, la transformation aboutissant à la ligne de la Fig. 3b consiste à retourner, sur place, les deux segments.

A la Fig. 3c, on a montré la ligne transformée de la ligne de la Fig. 2, suivant un troisième mode de transformation suivant l'invention. Le signal utile de la ligne transformée comprend une première partie se composant des échantillons V1 à V(p+k), et une seconde partie se composant des échantillons V(1014-k) à V(p). Bien entendu, l'échantillon V(1014-p) suit encore immédiatement l'échantillon V(p+k). Ici le premier segment a été conservé intact et le second a été retourné.

Le rang p de l'échantillon Vp qui définit la coupure entre les segments varie d'une ligne à la suivante d'une manière pseudo-aléatoire au moyen d'un générateur de séquence de nombres pseudo-aléatoires. En pratique, il n'est pas indispensable de retenir autant de valeurs p que d'échantillons dans le signal utile, mais plutôt $2^i$ groupes de valeurs, chaque groupe comprenant un nombre $2^j$ d'échantillons, j étant par exemple égal à 2, 3 ou 4 et, dans l'exemple décrit, i = 10-j. Comme le montrent les Figs. 2 et 3a à 3c, il existe, en fait, quatre combinaisons de segments disponibles pour la transmission de chaque ligne.

A la réception, les segments retournés sont remis dans leur sens initial. Pour obtenir ce résultat, le récepteur doit connaître pour chaque ligne le rang p et quelle combinaison parmi les quatre possibles a été utilisée.

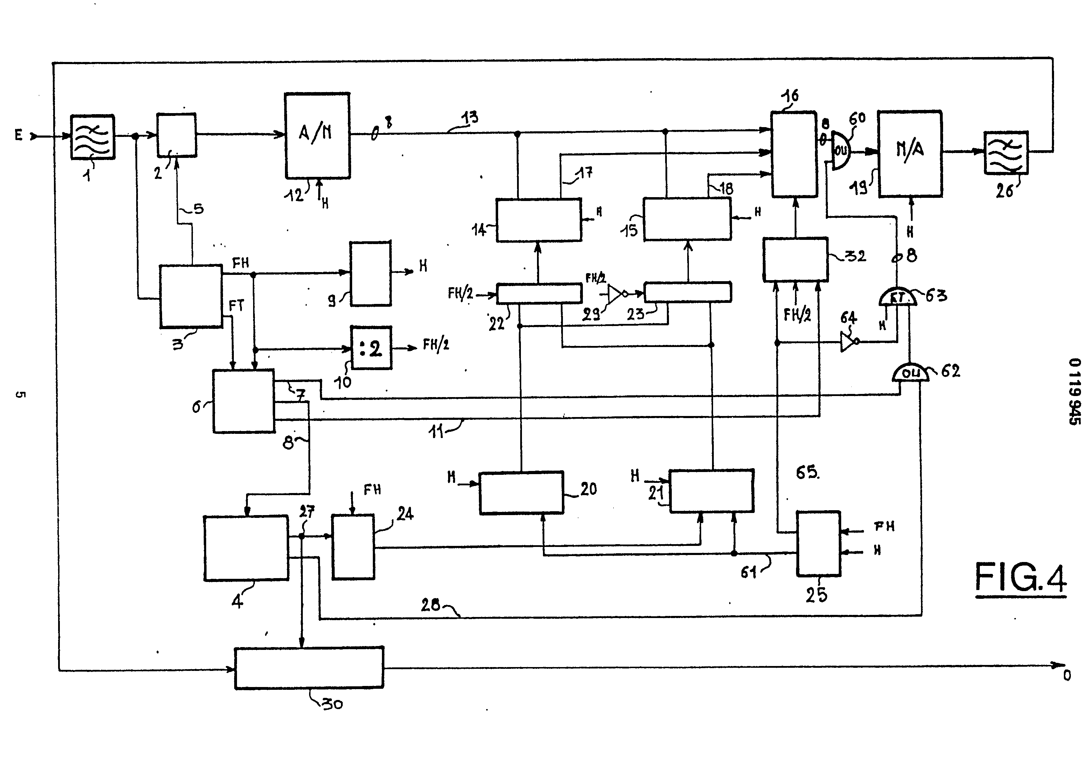

Dans le circuit d'embrouillage de la Fig. 4, le signal vidéo analogique à embrouiller est introduit par la liaison E dans un circuit de filtrage et d'adaptation 1. Le circuit 1 est d'abord un filtre qui effectue le calibrage fréquentiel du signal de 0 à 6 MHz. Ce filtrage est nécessaire avant l'échantillonnage pour éviter les phénomènes de repli du spectre. Le circuit 1 réalise aussi une adaptation en délivrant à sa sortie un signal sous faible impédance.

La sortie du circuit 1 est reliée, en parallèle, aux entrées d'un circuit de clampage 2 et d'un circuit d'extraction de synchronisations 3. Le circuit de clampage 2 est destiné à donner une référence continue au signal vidéo analogique. Il reçoit, par la liaison 5, du circuit 3 le signal de commutation sur le niveau de référence sur lesquels s'aligneront les fonds des signaux de synchronisation ligne S.

La sortie du circuit 1 est reliée, en parallèle, aux entrées d'un circuit de clampage 2 et d'un circuit d'extraction de synchronisations 3. Le circuit de clampage 2 est destiné à donner une référence continue au signal vidéo analogique. Il reçoit, par la liaison 5, du circuit 3 le signal de commutation sur le niveau de référence duquel s'aligneront les fonds des signaux de synchronisation ligne S.

Le circuit 3 extrait du signal vidéo analogique incident des informations temporelles qui sont les signaux de synchronisation ligne et les signaux de synchronisation trame, et il engendre le signal de commutation transmis, par 5, au circuit de clampage 2. Un tel circuit est disponible dans le commerce sous la référence TDA 9400 ou TDA 9500 commercialisé par la société ITT Semiconductors. Le circuit 3 a une sortie FT de synchronisation horloge trame et une sortie FH de synchronisation ligne. Ces sorties sont reliées aux entrées d'un circuit 6 d'identification de lignes.

Le circuit 6 est un compteur de lignes dont une sortie 7 délivre des signaux caractéristiques d'identification des lignes 17 et 623, une sortie 8 et une sortie 11 qui identifie les lignes de suppression trame.

La sortie FH est reliée à l'entrée de commande d'asservissement d'un oscillateur 9 qui est, de préférence, du type oscillateur asservi et qui est prévu pour engendrer une horloge à la fréquence de 1135 FH, soit encore 17,734 MHz. L'oscillateur 9 a une sortie H qui délivre l'horloge d'échantillonnage ou horloge point générale.

La sortie FH de 3 est encore reliée à l'entrée d'un diviseur par deux 10 dont la sortie FH/2 délivre un signal de fréquence moitié de la fréquence ligne et dont on verra l'utilisation par la suite.

La sortie du circuit de clampage 2 est reliée à l'entrée d'un convertisseur analogique/numérique 12 dont l'entrée d'horloge est reliée à la sortie de 9. Ainsi, le convertisseur A/N 12 échantillonne la vidéo à 1135 FH et quantifie les échantillons obtenus.

La sortie numérique du convertisseur 12 est reliée par un bus de données 13, ayant autant de fils que de bits par échantillon, à deux mémoires 14 et 15 et à une entrée d'un multiplexeur 16. Les mémoires 14 et 15 sont encore respectivement reliées par des bus de données 17 et 18 aux deux autres entrées du multiplexeur 16.

La sortie du multiplexeur 16 est reliée à une entrée d'une porte OU 60 dont la sortie est reliée à l'entrée d'un convertisseur numérique/analogique 19 dont l'entrée d'horloge H est reliée à 9. La sortie analogique du convertisseur N/A 19 est reliée à l'entrée d'un circuit de correction et de filtrage 26. Le circuit 26 corrige l'affaiblissement des fréquences élevées du signal utile et supprime les résidus indésirables engendrés par l'échantillonnage.

Le circuit d'embrouillage de la Fig. 4 comprend encore un compteur d'adresse d'écriture 20 et un compteur d'adresse de lecture 21. La sortie du compteur d'écriture 20 est reliée aux premières entrées de deux multiplexeurs 22 et 23, respectivement associés aux mémoires 14 et 15. De manière analogue, la sortie du compteur de lecture 21 est reliée aux secondes entrées des multiplexeurs 22 et 23. L'entrée de commande du multiplexeur 22 est reliée à la sortie du diviseur 10.

Le compteur d'écriture 20 a son entrée d'autorisstion reliée à la sortie 61 d'une base de temps ligne 25 et son entrée d'horloge reliée à H. Quand le compteur 20 est autorisé, il compte de 93 à 1014.

Le compteur de lecture 21 a son entrée d'autorisation reliée à la sortie 61 de la base de temps ligne 25, son entrée d'horloge reliée à H et une entrée de chargement reliée à la sortie d'un générateur de séquence pseudo-aléatoire 24. Quand le compteur 21 est autorisé, il compte en fonction du nombre p fourni par le générateur 24 d'une manière qui sera décrite plus tard.

Le générateur de séquence pseudo-aléatoire 24 a une entrée de chargement de clé 27 reliée à une sortie correspondante d'un circuit 4.

Le multiplexeur 22 a son entrée de commande reliée directement à la sortie FH/2 du diviseur 10 tandis que le multiplexeur 23 a son entrée de commande reliée à la même sortie FH/2 par l'intermédiaire d'un inverseur 29. Ainsi, pour les lignes d'une parité, le multiplexeur 22 transmet les adresses d'écriture de 20 à la mémoire 14 tandis que le multiplexeur 23 transmet les adresses de lecture de 21 à la mémoire 15, et pour les lignes de l'autre parité, ces états sont inversés.

Le circuit 4 est un circuit qui engendre les données qui sont nécessaires au récepteur pour qu'il puisse retrouver la clé de désembrouillage. Par la liaison 8, il reçoit du circuit d'identification de lignes 6 l'information de position temporelle des lignes 310 et 622. Il délivre, par 27, d'une part, au générateur 24, les données de la clé d'embrouillage et, d'autre part, à un circuit d'insertion de données 30 les mêmes données de la clé. Le circuit 4 a une autre sortie 28 qui lui permet de signaler chaque changement de clé au récepteur. A cet effet, la sortie 28 est reliée à l'entrée d'une porte OU 62 dont la sortie est reliée à une entrée d'une porte ET 63 à trois entrées dont la seconde entrée est reliée à l'horloge H, dont la troisième entrée est reliée, par un inverseur 64, à une sortie 65 de la base de temps ligne 25, et dont la sortie est reliée à la seconde entrée de la porte OU 60. La seconde entrée de la porte OU 62 est reliée à la sortie 7 du circuit d'identification de lignes 6. En ce qui concerne la structure du circuit 4, on pourra se reporter à la description du brevet FR-A-2 459 595.

La base de temps ligne 25 a encore sa sortie 65 reliée à une première entrée d'un circuit logique 32 dont la sortie est reliée à l'entrée de commande du multiplexeur 16. Les seconde et troisième entrées du circuit logique 32 sont respectivement reliées aux sorties FH/2 du diviseur 10 et 11 du compteur de lignes 6.

La base de temps ligne 25 a une entrée d'horloge H et une entrée de remise à zéro reliée à la sortie FH de 3. Le circuit 25 est un compteur dont la sortie 61 est activée au compte correspondant à t1 qui sert à déclencher les compteurs 20 et 21, et dont la sortie 65 est à "1" pour les comptes correspondant à t0 à t1 et t2 à t0.

La sortie du filtre 26 est reliée à l'entrée du circuit d'insertion de données 30 dont la sortie délivre le signal vidéo embrouillé vers les récepteurs, ce signal servant de modulation pour une porteuse adéquate. Le circuit 30 est un circuit classique d'insertion de données dans un signal vidéo, comme le prévoit le système DIDON. Dans la présente application, les données insérées sont les données de clé reçues du circuit 4, par 27.

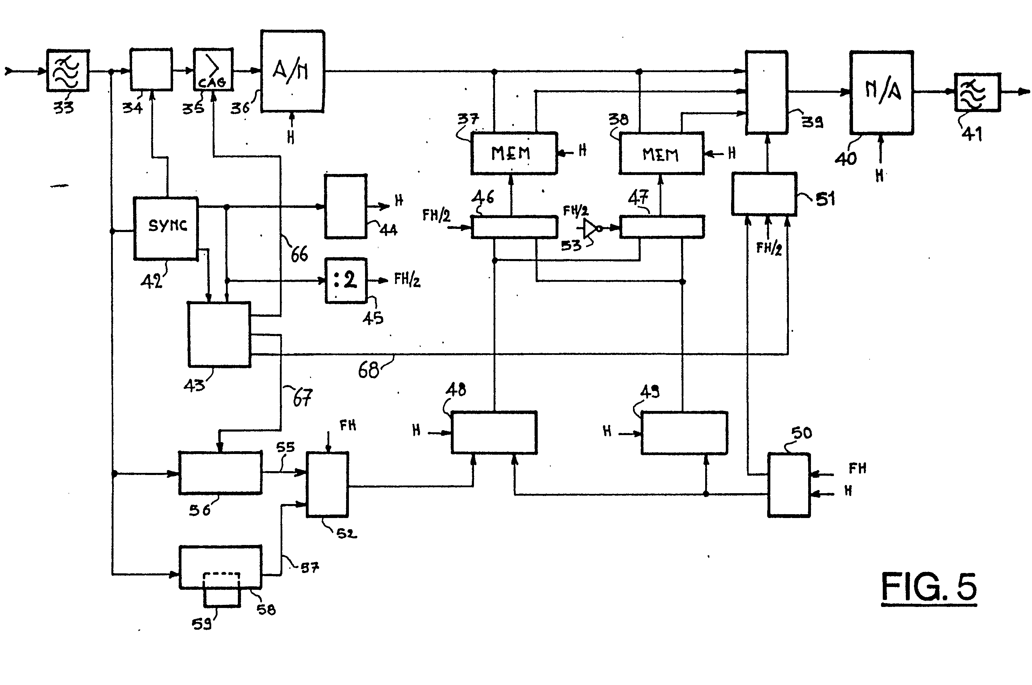

Dans le circuit de désembrouillage de la Fig. 5, le signal vidéo analogique embrouillé reçu du circuit d'embrouillage de la Fig. 4, est introduit par la liaison Er. Le circuit de désembrouillage de la Fig. 5 comprend de nombreux circuits élémentaires identiques ou analogues à ceux du circuit d'embrouillage. En effet, on y retrouve un filtre d'entrée 33, un circuit de clamplage 34, un convertisseur analogique/numérique 36, deux mémoires d'échantillons 37 et 38, un multiplexeur à trois entrées 39, un convertisseur numérique/analogique 40, un filtre de sortie 41, un circuit d'extraction de synchronisation 42, un compteur de lignes 43, un oscillateur asservi 44, un diviseur par deux 45, deux multiplexeurs à deux entrées 46 et 47, un compteur d'écriture 48, un compteur de lecture 49, une base de temps ligne 50, un circuit logique 51 et un générateur de séquence aléatoire 52, dont les homologues sont, à la Fig. 4, les circuits 1, 2, 12, 14, 15, 16, 19, 26, 3, 6, 9, 10, 22, 23, 20, 21, 25, 32 et 24. Toutes les interconnexions entre les circuits homologues sont pratiquement les mêmes. Toutefois, on notera qu'entre la sortie du circuit de clampage 34 et l'entrée du convertisseur A/N 36, est monté en série un amplificateur avec CAG 35, et, que la sortie du multiplexeur 39 est directement reliée à l'entrée du convertisseur N/A 40. Enfin, la sortie du filtre 41 constitue la sortie du circuit de désembrouillage. Par ailleurs, le circuit 4 est remplacé par deux circuit 56 et 58, et le circuit 30 est évidemment supprimé.

Le circuit d'identification de lignes a toujours trois sorties 66, 67 et 68, la sortie 66 délivrant les signaux d'identification des lignes 17 et 623 et étant reliée à l'entrée de commande de l'amplificateur 34, la sortie 67 délivrant les signaux d'identification des lignes 310 et 622 et étant reliée à l'entrée de commande du circuit 56, et la sortie 68 délivrant le signal de suppression trame et étant relié à une entrée du circuit logique 51.

Le générateur de séquence pseudo-aléatoire 52 a une entrée de commande d'initialisation 55 qui est reliée à la sortie du circuit de détection de synchronisation de clé 56 et une entrée de chargement de clé 57 qui est reliée à la sortie d'un circuit de contrôle d'accès 58, auquel est associé une carte d'accès 59. Les entrées des circuits 56 et 58 sont reliées à la sortie du filtre 33.

En pratique, le circuit de contrôle d'accès 58 est un récepteur de données DIDON dont on peut trouver la description dans le brevet FR-A-2 313 825. Le circuit 58 reçoit le signal vidéo complet du filtre 33, il tire des données transmises dans certaines lignes de suppression trame affectées à ce service les données de calcul de clé transmises, il les combine avec les données enregistrées sur la carte d'abonné 59 comme cela est décrit dans le brevet FR-A-2 459 595, et finalement il présente à sa sortie ce qu'il est convenu d'appeler la clé.

Le circuit de détection de synchronisation de clé 56 reçoit également la vidéo complète du filtre 33. D'autre part, le compteur de ligne 43 l'active à chaque ligne vidéo 310 ou 662 et, quand le circuit 56 détecte que cette ligne est au niveau de blanc, il transmet au générateur de séquence aléatoire 52 un signal d'initialisation qui déclenche dans 52 le chargment de la clé présente à la sortie du circuit 58.

Entre deux chargements de clé, le ou les registres à décalage du générateur 52 fonctionnent en utilisant, comme horloge, l'horloge de fréquence ligne FH. Donc, à chaque ligne de télévision, le générateur 52 délivre à sa sortie un nombre p qui définit la coupure entre les segments du diagramme de la Fig. 2, et un nombre compris entre 0 et 3 qui indique si le signal de la Fig. 2 a été transmis intact, ou s'il a subi l'une des trois transformations conduisant aux signaux embrouillés des Figs. 3a à 3c.

En pratique, le traitement des données dans les circuits 4 et 58 est effectué par le logiciel d'un microprocessur contenu dans chacun de ces circuits.

On va maintenant décrire le fonctionnement du circuit de la Fig. 4. Le compteur de lignes 6 définit d'abord le signal de suppression trame pendant lequel l'image n'est pas embrouillée. Ce signal est transmis par la liaison 11 vers le circuit logique 32 qui commande alors le multiplexeur 16 de manière que les signaux numériques délivrés par le convertisseur A/N 12 soient directement transmis au convertisseur N/A 19.

Par ailleurs, comme on l'a mentionné en décrivant la Fig. 1, entre les instants t2 et t1, le signal doit également être transmis sans embrouillage. A cet effet, la base de temps ligne 25, qui est remise à zéro par FH à chaque temps t0, active sa sortie 65 pendant les comptes correspondant à l'intervalle t2-t1, si bien que le circuit logique 32 commande le multiplexeur 16 de manière qu'il transmettre directement les échantillons issus de 12 vers 19, comme pour la suppression trame.

On supposera que, pour les lignes impaires, le signal FH/2 est au niveau haut si bien que le multiplexeur 22 est commandé de manière que les échantillons issus du convertisseur 12 soient écrits dans la mémoire 14 sous la commande du compteur d'écriture 20, alors que le multiplexeur 23 place la mémoire 18 sous la commande du compteur de lecture 21 et que le circuit logique 32 commande le multiplexeur 16 pour qu'il laisse passer les échantillons lus dans la mémoire 15 vers de convertisseur N/A 19. Pour les lignes paires, on a évidemment un état pratiquement symétrique, le multiplexeur 16 laissant passer les échantillons lus dans la mémoire 14.

A l'instant t1, la base de temps ligne 25 remet à zéro le compteur d'écriture 20 qui délivre alors les adresses d'écriture des échantillons dans la mémoire 14 ou 15, les adresses d'écriture étant dans l'ordre naturel.

Au temps t1, la base de temps ligne 25 remet également le compteur de lecture 21 à zéro. Celui-ci compte dans l'ordre naturel jusqu'à 92, si bien que la salve de référence CH est transmise sans embrouillage à partir de la mémoire 14 ou 15. Ensuite, le compteur 21 effectue un saut qui est fonction à la fois du nombre p délivré par 24 et du mode de transformation choisi entre les quatre possibles. Dans le mode non transformé de la Fig. 2, le compteur 21 continue à compter naturellement sans saut.

Dans le mode d'embrouillage illustré à la Fig. 3a, à partir de l'adresse 92, la lecture de la mémoire se fait ensuite à l'adresse (p+k), puis le compteur 21 est décrémenté jusqu'à l'adresse 93, puis l'adresse saute à p et enfin le compteur est incrémenté jusqu'à l'adresse (1014-k). Il faut noter ici que le générateur pseudo-aléatoire 24 peut délivrer un nombre p quelconque entre 1 et 1024, ce qui sans précaution positionnerait la coupure en dehors de la zone V93 à V1014 de la Fig. 1. C'est pourquoi, le compteur de lecture 21 comprend des moyens pour ajouter 128 au nombre p fourni par 24 quand celui-ci est inférieur à 93 et pour retrancher 16 à ce nombre fourni quand il est supérieur à 1014.

Dans le mode d'embrouillage illustré à la Fig. 3b, à partir de l'adresse 92, la lecture de la mémoire se fait d'abord à l'adresse (p + k), puis le compteur 21 est décrémenté jusqu'à l'adresse 93, puis le compteur saute à l'adresse (1014-k) et, enfin, le compteur est décrémenté jusqu'à l'adresse p.

Dans le mode d'embrouillage illustré à la Fig. 3c, à partir de l'adresse 92, la lecture de la mémoire se fait d'abord à l'adresse 93, puis le compteur est incrémenté jusqu'à l'adresse (p + k), puis l'adresse saute à l'adresse (1014-k) et, enfin, le compteur est décrémenté jusqu'à l'adresse p.

Le fonctionnement du circuit récepteur de la Fig. 5 est évidemment analogue à celui qui vient d'être décrit. Le compteur de lignes 43, la base de temps ligne 50, le circuit logique 51 et les multiplexeurs 46 et 47 fonctionnent comme 6, 25, 32, 22 et 23, en ce qui concerne la suppression trame et les intervalles t2 à t1.

Au temps t1, la base de temps ligne 50 remet le compteur d'écriture 48 à zéro. Celui-ci compte dans l'ordre naturel jusqu'à 92, si bien que la salve de référence CH est mise en mémoire sans embrouillage dans la mémoire 37 ou 38. Ensuite le compteur 48 effectue un saut analogue au saut effectué en lecture dans le circuit émetteur de la Fig. 4.

Plus précisément dans le mode de la Fig. 2, le compteur 48 est, à partir de l'adresse 93, incrémenté jusqu'à 1014.

Dans le mode de la Fig. 3a, à partir de l'adresse 92, l'écriture dans la mémoire se fait d'abord à l'adresse (p + k), puis le compteur 48 est décrémenté jusqu'à l'adresse 93, puis le compteur n'émet pas d'adresse d'écriture pendant k' coups d'horloge, puis saute à l'adresse (p + k' + 1) et enfin est incrémenté jusqu'à l'adresse (1014-k).

Dans le mode d'embrouillage illustré à la Fig. 3b, à partir de l'adresse 92, l'écriture dans la mémoire se fait d'abord à l'adresse (p + k), puis le compteur 48 est décrémenté jusqu'à l'adresse 93, puis le compteur saute à l'adresse (1014-k) et enfin est décrémenté jusqu'à l'adresse (p + k').

Dans le mode d'embrouillage illustré à la Fig. 3c, à partir de l'adresse 92, la lecture de la mémoire se fait d'abord à l'adresse 93, puis le compteur 48 est incrémenté jusqu'à l'adresse (p + k), puis le compteur saute à l'adresse (1014-k) et enfin il est décrémenté jusqu'à l'adresse (p + k').

A l'instant t1, la base de temps ligne 50 remet à zéro le compteur de lecture 49 qui délivre les adresses de lecture des échantillons dans la mémoire 37 ou 38, les adresses de lecture étant dans l'ordre naturel.

Bien entendu, les nombres k et k' peuvent être réglés, par exemple manuellement dans les compteurs 21 et 48, pour tenir compte des conditions réelles de propagation.

Dans le circuit d'embrouillage de la Fig. 4, quand survient par exemple la ligne 17, la sortie 7 du compteur de lignes 6 est activée, si bien que la sortie de la porte OU 62 est activée. Quand la sortie 65 de la base de temps ligne 25 est désactivée, c'est à dire pendant la salve CH et le signal utile V, la sortie de l'inverseur 64 est activée. Donc la porte ET 63 transmet les impulsions d'horloge à la porte OU 60 qui les transmet au convertisseur N/A 19. En pratique, comme le convertisseur A/N 12 est supposé convertir les échantillons sur huit bits, il y a évidemment huit portes OU 60. Sous une autre forme, entre t1 et t2, pour la ligne 17, tous les échantillons reçus par le convertisseur N/A 19 sont de valeur maximale. La ligne 17 émise par 19 va donc être entièrement au niveau du blanc.

Dans le circuit de désembrouillage, le compteur de lignes 43 signale, par 66, à l'amplificateur 35 qu'il doit prendre en considération le niveau maximal transmis sur la ligne 17. Ainsi, le circuit amplificateur à contrôle automatique de gain 35 peut définir son gain de manière que la dynamique du signal transmis au convertisseur A/N 36 soit compatible avec celle de ce dernier.

Dans le cas d'un changement de clé par le circuit 4, la liaison 8 transmet un signal d'identification de la ligne 310, par exemple, ce qui entraîne alors l'activation de la sortie 28, laquelle active la sortie de la porte OU 62. On retrouve alors pour la ligne 310, un fonctionnement identique à celui qui vient d'être décrit pour la ligne 17. Donc cette ligne 310 est transmise au niveau du blanc. Dans le récepteur, pour chaque ligne 310, le circuit 56 est mis en alerte par la liaison 67. Quand un niveau continu de blanc est reçu, la liaison 55 est activée provoquant le changement de clé dans 52. Bien entendu, la nouvelle clé avait été transmise auparavant de 4 vers 58, par 30.

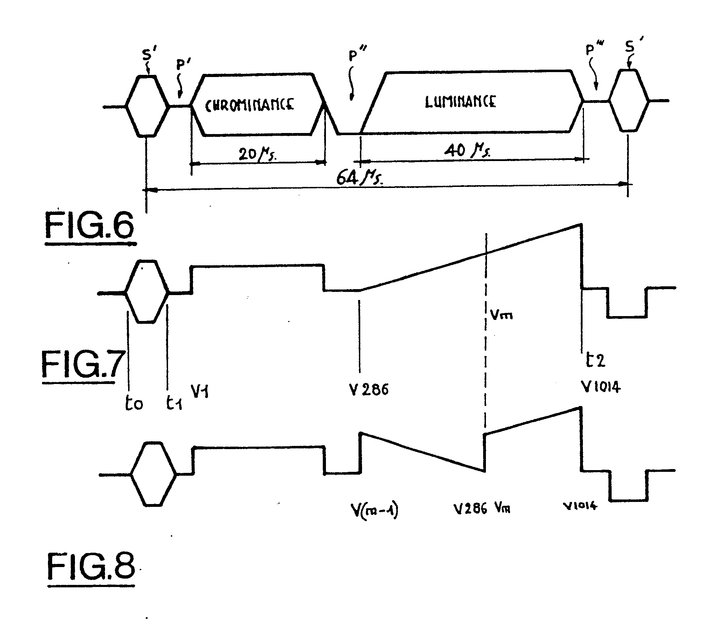

La Fig. 6 montre un signal vidéo de ligne MAC, tel qu'il est défini comme on l'amentionné dans le préambule. Ce signal MAC se compose d'un mot de synchronisation de ligne S', d'un signal de chrominance d'une durée de 20 microsecondes et d'un signal de luminance d'une durée de 40 microsecondes. Ces signaux sont respectivement séparés par des paliers de clampage P', P" et P"'. Le signal MAC se distingue d'un signal SECAM, par exemple, en ce que la chrominance ne module plus en fréquence le signal de luminance, mais en est temporellement complètement distinct. Pour réaliser cette séparation, le signal de luminace a été temporellement comprimé de 52 à 40 microsecondes, de qui entraîne bien entendu un élargissement de la bande passante, mais libère, en récupérant la durée de la salve de référence SECAM ou PAL, 20 microsecondes pour loger la chrominance. Celle-ci est temporellement plus comprimée que la luminance. Bien entendu, à un instant donné du signal de chrominance correspond un instant du signal de luminance.

A la Fig. 7, on a transposé le dessin de la Fig. 6 pour retrouver un dessin analogue à celui de la Fig. 2.

On voit, à la Fig. 8, qu'il est possible d'embrouiller le signal de luminance de la Fig. 7, en effectuant une coupure entre les échantillons V286 et V1014. Le circuit de la Fig. 4 peut convenir à cette opération en modifiant dans le compteur 21 la logique de calcul du point de coupure. En effet, il faut ici calculer le point $\underline{m}$ en ajoutant, par exemple, 384 au nombre délivré par le générateur pseudo-alétoire quand ce nombre est inférieur à 286.

A la Fig. 8, on a montré le signal de la Fig. 7 embrouillé suivant le mode de la Fig. 3a. Bien entendu, dans la réalité, on prévoirait également des recouvrements.

Comme on l'a dit ci-dessus, à l'échantillon Vm de luminance, correspond un échantillon homothétique dans le signal de chrominance. On pourrait donc prévoir sur la chrominace un embrouillage homothétique de celui de la luminance, en n'utilisant qu'une clé, qu'un seul générateur pseudo-aléatoire, mais deux jeux de compteurs d'écriture et de lecture. Le procédé de l'invention peut également être utilisé indépendamment sur la luminance et la chrominance. Deux clés indépendantes sont alors nécessaires.

Les considérations mentionnées ci-dessus en ce qui concerne le signal MAC montrent par ailleurs qu'il est possible même dans un signal traditionnel de modifier facilement les limites entre lesquelles le signal peut être embrouillé suivant l'invention. Cela montre que l'on peut ne brouiller sélectivement qu'une bande verticale d'une image de télévision, ce qui peut parfois être utile.

**Revendications**

1. Procédé d'embrouillage et de désembrouillage du signal utile (V) d'une ligne de signal vidéo échantillonné, dans lequel au moins une partie dudit signal utile (V) est découpée en deux segments adjacents (V93 à Vp et Vp à V1014), chacun d'entre eux comportant au moins deux échantillons, le point de coupure (Vp) entre les deux segments étant défini d'une manière pseudo-aléatoire synchrone à l'émission et à la réception, caractérisé en ce qu'à l'émission (Figs. 3a ou 3c), un des segments est transmis retourné et, en ce qu'à la réception, ledit segment retourné est remis dans le sens initial.

2. Procédé suivant la revendication 1, caractérisé en ce que lesdits deux segments sont retournés sur place à l'émission (Fig. 3b), puis remis dans le sens initial à la réception.

3. Procédé suivant la revendication 1 ou 2, caractérisé en ce qu'à la définition pseudo-aléatoire du point de coupure entre les segments, s'ajoute la sélection pseudo-aléatoire du ou des segments à retourner ou non.

4. Procédé suivant l'une des revendications 1 à 3, caractérisé en ce que les segments sont, non seulement adjacents, mais se recouvrent partiellement (de Vp à V(p+k)) au voisinage du point de coupure, afin que le signal embrouillé puisse être transmis sur un réseau à bande limitée de fréquences, tel que les réseaux existants, quels que soient la modulation et le support.

5. Procédé suivant la revendication 4, caractérisé en ce qu'à la réception, la portion avant (Vp à V(p+k')) du recouvrement du second segment est négligée, à la réception, lors de la remise dans le sens initial du ou des segments retournés.

6. Procédé suivant l'une des revendication 1 à 5, s'appliquant au signal vidéo de ligne MAC, caractérisé en ce que, non seulement le signal de luminsnce, mais également le signal de chrominance est embrouillé.

7. Dispositif d'embrouillage mettant en oeuvre le procédé suivant l'une des revendications 1 à 5, comprenant deux mémoires d'échantillons (14, 15) ayant chacune la capacité d'une ligne de signal vidéo, des moyens de commande d'écriture (20) pour mémoriser dans l'ordre naturel les échantillons de chaque ligne de signal vidéo à embrouiller alternativement dans une desdites mémoires, des moyens de commande de lecture (21) des mémoires, caractérisé en ce que lesdits moyens de commande de lecture (21) sont prévus pour alternativement y lire au moins une partie des échantillons mémorisés dans l'ordre inverse de l'ordre d'entrée.

8. Dispositif de désembrouillage mettant en oeuvre le procédé suivant l'une des revendications 1 à 5, comprenant deux mémoires (37, 38) d'échantillons ayant chacune la capacité d'une ligne de signal vidéo, des moyens de commande de lecture (49) des mémoires pour y lire alternativement les échantillons dans l'ordre naturel, des moyens de commande d'écriture (48) pour mémoriser chaque ligne de signal vidéo embrouillé alternativement dans une desdites mémoires, caractérisé en ce que lesdits moyens de commande d'écriture (48) sont prévus pour écrire au moins une partie des échantillons dans l'ordre inverse de l'ordre d'arrivée.

9. Système constitué d'un dispositif d'embrouillage suivant la revendication 7 et d'un ou d'une pluralité de dispositifs de désembrouillage suivant la revendication 8, caractérisé en ce qu'il comprend encore dans le dispositif d'embrouillage un générateur de clé (4) et dans le ou les dispositifs de désembrouillage un récepteur de clé (58), ladite clé définissant, par l'intermédiaire de générateurs de séquence pseudo-aléatoire (24, 52) respectivement prévus dans tous les dispositifs, le rang (p) des échantillons entre lesquels se place ladite coupure.

**Patentansprüche**

1. Verfahren zum Verschlüsseln und Entschlüsseln des Nutzsignals (V) einer Zeile eines abgetasteten Videosignals, bei dem wenigstens ein Teil des genannten Nutzsignals (V) in zwei benachbarte Segmente (V93 bis Vp und Vp bis V1014) aufgeteilt wird, von denen jedes wenigstens zwei Abtastungen umfaßt, wobei der Aufteilungspunkt (Vp zwischen den beiden Segmenten in pseudo-zufälliger Weise synchron beim Senden und Empfangen definiert wird, dadurch gekennzeichnet, daß beim Senden (Fig. 3a oder 3c) eines der Segmente umgekehrt übertragen wird und daß beim Empfangen das genannte umgekehrte Segment in die ursprüngliche Richtung zurückgebracht wird.

2. Verfahren nach Anspruch 1, dadurch gekennzeichnet, daß die beiden genannten Segmente auf der Stelle beim Senden umgekehrt und dann beim Empfangen in ihre ursprüngliche Richtung zurückgebracht werden.

3. Verfahren nach Anspruch 1 oder 2, dadurch gekennzeichnet, daß zu der pseudo-zufälligen Definition des Aufteilungspunktes zwischen den Segmenten die pseudo-zufällige Auswahl des oder der umzukehrenden oder nicht umzukehrenden Segmente hinzugefügt wird.

4. Verfahren nach einem der Ansprüche 1 bis 3, dadurch gekennzeichnet, daß die Segmente nicht nur benachbart sind, sondern sich teilweise (von Vp bis V(p + k)) in der Nachbarschaft des Aufteilungspunktes überlappen, so daß das verschlüsselte Signal in einem Netzwerk mit einem begrenzten Frequenzband übertragen werden kann, so wie existierende Netzwerke, unabhängig von der Modulation und dem Träger.

5. Verfahren nach Anspruch 4, dadurch gekennzeichnet, daß der vordere Teil (V bis V(p + k')) der Überlappung des zweiten Segments beim Empfangen vernachlässigt wird, wenn das oder die umgekehrten Segmente in ihre ursprüngliche Richtung zurückgebracht werden.

6. Verfahren nach einem der Ansprüche 1 bis 5 mit Anwendung bei dem MAC Zeilen-Videosignal, dadurch gekennzeichnet, daß nicht nur das Luminanz-Signal, sondern auch das Chrominanz-Signal verschlüsselt wird.

7. Verschlüsselungsvorrichtung unter Verwendung des Verfahrens nach einem der Ansprüche 1 bis 5, umfassend zwei Abtastspeicher (14, 15), von denen jeder die Kapazität einer Zeile des Videosignals hat, Schreibsteuermittel (20), um die Abtastungen jeder zu verschlüsselnden Zeile des Videosignals in ihrer natürlichen Reihenfolge in einen der Speicher einzuschreiben, Lesesteuermittel (21) für das Auslesen aus den Speichern, dadurch gekennzeichnet, daß die genannten Lesesteuermittel (21) für ein abwechselndes Auslesen wenigstens eines Teils der gespeicherten Abtastungen in einer Reihenfolge eingerichtet sind, die umgekehrt zu der Reihenfolge des Eingangs ist.

8. Entschlüsselungsvorrichtung unter Verwendung des Verfahrens nach einem der Ansprüche 1 bis 5, umfassend zwei Abtastspeicher (37, 38), von denen jeder die Kapazität einer Zeile des Videosignals hat, Lesesteuermittel (49), um die Abtastungen abwechselnd in ihrer natürlichen Reihenfolge aus den Speichern auszulesen, Schreibsteuermittel (48), um abwechselnd jede verschlüsselte Zeile des Videosignals in einen der Speicher einzuschreiben, dadurch gekennzeichnet, daß die genannten Schreibsteuermittel (48) zum Einschreiben wenigstens eines Teils der Abtastungen in einer Reihenfolge eingerichtet sind, die umgekehrt zu der Reihenfolge ihrer Ankunft ist.

9. System, bestehend aus einer Verschlüsselungsvorrichtung nach Anspruch 7 und einer oder mehreren Entschlüsselungsvorrichtungen nach Anspruch 8, dadurch gekennzeichnet, daß es ferner in der Verschlüsselungsvorrichtung einen Schlüsselgenerator (4) und in der Entschlüsselungsvorrichtung bzw. den Entschlüsselungsvorrichtungen einen Schlüssel-Empfänger (58) enthält, wobei der genannte Schlüssel durch Pseudo-Zufallsfolge-Generatoren (24, 52), die jeweils in allen Vorrichtungen vorgesehen sind, den Rang (p) der Abtastungen definiert, zwischen denen die genannte Aufteilung stattfindet.

**Claims**

1. A process for scrambling and unscrambling the useful signal (V) of a line of sampled video signal, wherein at least one part of said useful signal (V) is divided into two adjacent segments (V93 to Vp and Vp to V1014), each one of the segments comprising at least two samples, the dividing point (Vp) between the two segments being defined in a pseudo-random manner synchronously in the transmission and the reception, characterized in that at the time of transmission (Figs. 3a or 3c), one of the segments is transmitted in a reversed manner and in that at the time of reception, said reversed segment is returned back into the original direction.

2. A process according to claim 1, characterized in that said two segments are reversed on the spot at the time of transmission (Fig. 3b), then returned back into their original direction at the time of reception.

3. A process according to claim 1 or 2, characterized in that to the pseudo-random definition of the dividing point between the segments there is added the pseudo-random selection of the segment or the segments to be reversed or not.

4. A process according to anyone of claims 1-3, characterized in that the segments not only are adjacent but are partly overlapping (from Vp to V(p + k)) in the neighbohrhood of the dividing point, so that the scrambled signal can be transmitted in a network with a limited frequency band, such as existing networks, regardless of the modulation and the support.

5. A process according to claim 4, characterized in that the front portion (Vp to V(p + k')) of the overlapping in the second segment is neglected, at the time of reception, when the reversed segment or segments is or are returned back into their original direction.

6. A process according to anyone of claims 1-5, which applies to the MAC line video signal, characterized in that not only the luminance signal, but also the chrominance signal is scrambled.

7. A scrambling device implementing the process according anyone of claims 1-5, comprising two sample memories (14, 15) each having the capacity of the video signal line, writing control means (20) for writing in their natural order the samples of each video signal line to be scrambled alternately into one of said memories, reading control means (21) for reading out of the memories, characterized in that said reading control means (21) are provided for alternately reading out therefrom at least a part of the memorized samples in an order which is the reverse of the order of input.

8. An unscrambling device for implementing the process according to anyone of claims 1-5, comprising two memories (37, 38) for samples, each memory having the capacity of one video signal line, reading control means (49) for reading out the memories in order to alternately read out therefrom the samples in their natural order, writing control means (48) for alternately writing each scrambled video signal line into one of said memories, characterized in that said writing control means (48) are provided in order to write at least a part of the samples in an order which is the reverse of the order of their arrival.

9. A system comprised of one scrambling device according to claim 7 and one or a plurality of unscrambling devices according to claim 8, characterized in that it further comprises in the scrambling device a key generator (4) and in the unscrambling device or devices a key receiver (58), said key defining through pseudo-random sequence generators (24, 52) respectively provided for in all the devices, the rank (p) of the samples between which said division takes place.

FIG.1

FIG. 2

FIG. 3a

FIG. 3b

FIG. 3c

FIG.4

FIG. 5

0 119 945

**0 119 945**

FIG.6

FIG.7

FIG.8